# EUROPÄISCHE PATENTSCHRIFT

(11) **EP 3 637 086 B1**
(45) Veröffentlichungstag und Bekanntmachung des Hinweises auf die Patenterteilung: **03.08.2022**
(21) Anmeldenummer: 19200323.4
(22) Anmeldetag: 30.09.2019
(51) Int. Cl.: G01N 3/00, B22F 3/105, B28B 1/00, B29C 64/153, B33Y 80/00, B33Y 30/00

(54) **PROBENKÖRPERANORDNUNG ZUR BESTIMMUNG MECHANISCHER UND/ODER THERMISCHER EIGENSCHAFTEN VON PROBENKÖRPERN UND EIN VERFAHREN ZUR BESTIMMUNG MECHANISCHER UND/ODER THERMISCHER EIGENSCHAFTEN AN PROBENKÖRPERN**
SPECIMEN ASSEMBLY FOR DETERMINING MECHANICAL AND / OR THERMAL PROPERTIES OF SPECIMENS, AND A METHOD FOR DETERMINING MECHANICAL AND / OR THERMAL PROPERTIES ON SPECIMENS
DISPOSITIF DE CORPS D'ÉCHANTILLON DESTINÉ À LA DÉTERMINATION DES PROPRIÉTÉS MÉCANIQUES ET / OU THERMIQUES D'UN CORPS D'ÉCHANTILLON ET PROCÉDÉ DE DÉTERMINATION DES PROPRIÉTÉS MÉCANIQUES ET / OU THERMIQUES D'UN CORPS D'ÉCHANTILLON

(30) Priorität: 09.10.2018 DE 102018217225
(43) Veröffentlichungstag der Anmeldung: 15.04.2020
(73) Patentinhaber: Fraunhofer-Gesellschaft zur Förderung der angewandten Forschung e.V., 80686 München (DE)
(72) Erfinder: Scheithauer, Uwe, 01277 Dresden (DE); Roszeitis, Sven, 01277 Dresden (DE); Neumeister, Peter, 01277 Dresden (DE); Abel, Johannes, 01277 Dresden (DE); Weingarten, Sven, 01277 Dresden (DE); Schwarzer, Eric, 01277 Dresden (DE); Scholz, Sebastian, 01277 Dresden (DE)
(74) Vertreter: Pfenning, Meinig & Partner mbB

(56) Entgegenhaltungen:
- US-A1- 2009 326 706
- US-A1- 2018 188 144

## Beschreibung

Die Erfindung betrifft eine Probenkörperanordnung zur Bestimmung mechanischer und/oder thermischer Eigenschaften von Probenkörpern und ein Verfahren zur Bestimmung mechanischer und/oder thermischer Eigenschaften an Probenkörpern.

Bisher ist es üblich, zur Bestimmung mechanischer und/oder thermischer Eigenschaften einzeln gefertigte Prüfkörper einzusetzen. Diese haben in der Regel ein großes Volumen und sie werden einzeln entsprechenden Prüfungen unterzogen, was einen hohen zeitlichen und finanziellen Aufwand hervorruft. Um repräsentative statistisch sichere Aussagen über Eigenschaften zu erhalten ist, eine Vielzahl von Einzelprüfungen erforderlich, die einen hohen Fertigungs- und Rüstaufwand hervorrufen.

Da die Prüfkörper jeweils gesondert hergestellt werden, entsprechen ihre Eigenschaften nicht genau denen, die entsprechend hergestellte reale Bauteile tatsächlich aufweisen. Insbesondere können Oberflächeneigenschaften, die beispielsweise durch eine spanende Bearbeitung oder thermische Behandlung bzw. thermische Einflüsse bei der Herstellung beeinflussbar sind, nicht in ausreichendem Maß berücksichtigt werden. Teilweise werden auch die Prüfkörpereigenschaften durch die Bearbeitung der Oberflächen verändert, so dass die Testergebnisse nicht das reale Belastungsverhalten wiederspiegeln.

Insbesondere bei Bauteilen, die mit additiven Herstellungsverfahren hergestellt werden, wie dies beispielsweise das selektive Lasersintern, -schmelzen oder die verschiedenen bekannten Druckverfahren sind, treten entsprechend große Unterschiede bei der Bewertung und Berücksichtigung von Ergebnissen aus Prüfungen an Prüfkörpern in Bezug zu entsprechend hergestellten Bauteilen auf. Schräg im Raum orientierte Strukturen besitzen dabei aufgrund des lagenweisen Aufbaus oftmals andere Oberflächeneigenschaften als Strukturen, die parallel zu einer der drei Raumachsen ausgerichtet sind. Diese resultieren wiederum in unterschiedlichem Belastungsverhalten.

So sind aus US 2018/0188144 A1 eine Vorrichtung und ein Verfahren zum schnellen Prüfen von Materialeigenschaften von additiv hergestellten Proben bekannt.

US 2009/0326706 A1 betrifft Möglichkeiten zur Beeinflussung eins Herstellungsprozesses anhand ermittelter Eigenschaften.

Es ist daher Aufgabe der Erfindung, Möglichkeiten für eine kostengünstige Bestimmung mechanischer und/oder thermischer Eigenschaften an Probenkörpern anzugeben, die zu einer verbesserten Bewertung und Berücksichtigung von Eigenschaften an analog hergestellten Bauteilen und ggf. Nachweismöglichkeiten führen.

Erfindungsgemäß wird diese Aufgabe mit einer Probenkörperanordnung, die die Merkmale des Anspruchs 1 aufweist, gelöst. Anspruch 8 definiert ein Verfahren zur Bestimmung mechanischer und/oder thermischer Eigenschaften. Vorteilhafte Ausgestaltungen und Weiterbildungen der Erfindung können mit in untergeordneten Ansprüchen bezeichneten Merkmalen realisiert werden.

So können als mechanische Eigenschaften das Deformationsverhalten, die Bruchfestigkeit u. a. gegen Biegung, Torsion, Zug und Druck, der E-Modul und Schubmodul oder elastische Deformationsgrenzen bestimmt werden. Dies kann auch temperaturabhängig bei unterschiedlichen Temperaturen erreicht werden. Es ist auch die Bestimmung der thermischen Ausdehnung und/oder der thermischen Leitfähigkeit möglich.

Bei der erfindungsgemäßen Probenkörperanordnung sind mehrere Probenkörper, die jeweils gleich dimensioniert, mit gleicher Geometrie und mit dem gleichen additiven Herstellungsverfahren hergestellt worden sind, auf einer Oberfläche einer Trägerplatte an definierten Positionen in einem Abstand zueinander angeordnet. Die Trägerplatte ist so ausgebildet, dass sie in einer Halteeinrichtung definiert fixierbar ist. Die Anordnung und Ausrichtung sollte die Anordnung und Wirkung von Einrichtungen, die zur definierten mechanischen und/oder thermischen Beeinflussung ausgebildet sind, sowie mindestens eines Sensors, mit dem Einflussgrößen mindestens einer ausgeübten Wirkung auf Probenkörper erfasst werden können, berücksichtigen können. Außerdem sollte die Trägerplatte in einer Halteeinrichtung so fixiert werden können, dass ein sicherer fester Halt bei den wirkenden Einflüssen bei der Bestimmung insbesondere von Kräften bzw. Momenten gegeben ist.

Neben mehreren Probenkörpern, die jeweils gleich dimensioniert, mit gleicher Geometrie und mit dem gleichen Herstellungsverfahren hergestellt worden sind, können andere Probenkörper, die nicht jeweils gleich dimensioniert, mit gleicher Geometrie und mit dem gleichen Herstellungsverfahren hergestellt worden sind oder mehrere Probenkörper, die jeweils wiederum gleich dimensioniert, mit gleicher Geometrie und mit dem gleichen Herstellungsverfahren hergestellt worden sind, sich aber von den zuerst genannten Probenkörpern unterscheiden, auf oder einer Trägerplatte angeordnet sein.

Gleich hergestellte Probenkörper weisen auch eine jeweils gleiche Oberfläche auf. Diese kann insbesondere durch spanende Bearbeitung und/oder durch thermische Einflussnahme erreicht werden. So kann beispielsweise ein Auf- bzw. Anschmelzen oder eine Gefügeänderung genauso, wie ein Werkstoffabtrag an Probenkörpern in jeweils gleicher Weise hervorgerufen worden sein.

Die Probenkörperfertigung sollte so gestaltet werden, dass die Oberflächeneigenschaften der Probenkörper denen gleichen, die in bestimmten Bereichen eines auszulegenden Bauteils aufgrund der Fertigungsbedingungen vorliegen, um eine praxisrelevante Bestimmung von Eigenschaften mit den Probenkörpern zu ermöglichen, die auch einen direkten Bezug für die Herstellung von Bauteilen und den so hergestellten Bauteilen ermöglichen.

Die Probenkörper können gemeinsam mit der Trägerplatte mit einem additiven Herstellungsverfahren hergestellt worden sein oder mit einem additiven Herstellungsverfahren hergestellte Probenkörper können an der jeweiligen Oberfläche der Trägerplatte stoff- und/oder formschlüssig befestigt sein.

Durch die gemeinsame Fertigung kann nicht nur eine effektive Herstellung erreicht werden. Es ist auch möglich, alle Probenkörper auch bei gleichen Bedingungen zu fertigen. Da auch die Trägerplatte so gefertigt werden kann, können mechanische Effekte verursacht durch die Fixierung der Probenkörper weitestgehend vermieden werden.

Probenkörper können auf einer Trägerplatte allein durch eine Löt-, Schweißoder Klebverbindung befestigt werden. Allein oder zusätzlich können an einer Trägerplatte auch Erhebungen und/oder Vertiefungen ausgebildet sein, in die entsprechend komplementär ausgebildete Erhebungen und/oder Vertiefungen an Probenkörpern aufgesetzt oder eingeführt werden können.

Vorteilhaft kann an der Oberfläche von Probenkörpern definiert mindestens ein Oberflächenbereich für einen Kraft- oder Momentangriff einer Einrichtung zur Bestimmung mechanischer Eigenschaften und/oder eine definierte Erwärmung des jeweiligen Probenkörpers, der an den gleichen Probenkörpern jeweils an dergleichen Position angeordnet und gleich ausgebildet ist, vorhanden sein.

So kann man vergleichbare Verhältnisse bei der Kraft- und/oder Momenteinleitung in die Probenkörper erreichen, was nicht nur die gleiche Hebelwirkung bei einer Kraft- und/oder Momentwirkung, sondern auch den Einfluss der Oberflächen bei der Kraft- und Momenteinleitung in Probenkörper betrifft. Dies trifft sinngemäß auch auf eine Temperaturänderung zu. Dazu kann eine definierte Erwärmung beispielsweise mit einem Energiestrahl, der auf dafür vorgesehene Oberflächenbereiche von Probenkörpern gerichtet werden kann, erreicht werden. Die entsprechende Leistung kann entsprechend gewählt werden, so dass bei einer Temperaturmessung oder der Bestimmung der Volumenvergrößerung die thermische Leitfähigkeit bzw. die thermische Ausdehnung mit einem entsprechend geeigneten Sensor, der an einer geeigneten Position angeordnet ist oder dort messen kann, vergleichbare Messwerte an den bevorzugt gleichen Probenkörpern erhalten werden können.

So können Kräfte und/oder Momente beispielsweise mit einer Einrichtung in Probenkörper eingeleitet werden, mit der Druck- oder Zugkräfte auf die Probenkörper ausgeübt werden können.

Bevorzugt können Probenkörper in einer Reihen- und Spaltenanordnung und dabei jeweils gleiche Probenkörper in gemeinsam einer Reihe und/oder Spalte angeordnet sein.

Es können mindestens 10 gleiche Probenkörper auf einer Oberfläche einer Trägerplatte angeordnet sein. Selbstverständlich können weit mehr als 10 Probenkörper auf einer Oberfläche einer Trägerplatte angeordnet sein, was den Aufwand weiter verringert. Es können sogar Probenkörper an zwei gegenüberliegend angeordneten Oberflächen der Trägerplatte vorhanden sein.

Die Probenkörper sollten so angeordnet sein, dass eine eindeutige Zuordnung der Probenkörper möglich ist sowie Abstände zwischen den Probenkörpern eingehalten sind, die eine gegenseitige Beeinflussung der benachbart angeordneten Probenkörper verhindern und eine Zugänglichkeit zu Probenkörpern mit einem mechanischen Prüfgerät und/oder mindestens einem Sensor ermöglichen.

Das Volumen der Probenkörper sollte der Komponentengröße im angestrebten Bauteil entsprechen.

Bei der Erfindung besteht auch die Möglichkeit, eine Bestimmung von Eigenschaften an Probenkörpern durchzuführen, die auf der Trägerplatte angeordnet sind und deren Längsachse in Bezug zur Oberfläche der Trägerplatte in einem Winkel > 0° bis ≤ 90 °, bevorzugt zwischen 30 ° bis 90 ° ausgerichtet ist. Sie können bei der additiven Fertigung in diesem Winkel geneigt auf einer horizontal ausgerichteten Oberfläche der Trägerplatte hergestellt werden.

Die Herstellung mit dieser Ausrichtung soll so erfolgen, dass die additive Herstellung auf einer Ebene, in einem Winkel im Bereich 5 ° bis 60 °, besonders bevorzugt im Bereich 30 ° bis 60 ° in Bezug zur Horizontalen ausgerichtet war, erfolgte. Dies wird bei Probenkörpern erfolgen, die mit einem Druckverfahren hergestellt worden sind. Bei einer Prüfung an Probenkörpern, die so hergestellt worden sind, kann man den Einfluss der Ausrichtung im Raum und der aus dem Aufbau aus einzelnen Lagen bzw. Schichten, die bei der additiven Fertigung übereinander mit dem entsprechenden Neigungswinkel der Trägerplatte zur Horizontalen übereinander ausgebildet worden sind, resultierenden Oberfläche auf Belastungseigenschaften erfassen. Dabei spielt es eine Rolle, dass die Kräfte oder Momente bei einer Prüfung immer in dem gleichen Winkel wirken. Durch eine Variation der Ausrichtung der Probenkörper sowie der Trägerplatte können unterschiedliche Oberflächen, aber auch Querschnitte und Grenzflächen zwischen den einzelnen Schichten generiert werden, die wiederum einen Einfluss auf das Belastungsverhalten der Probenkörper haben. Sichtbar wird dies beispielsweise an Bruchflächen, die parallel zu den übereinander bei der additiven Fertigung ausgebildeten Lagen bzw. Schichten ausgerichtet sind, dabei aber nicht parallel zur Oberfläche der Trägerplatte, auf der die Probenkörper angeordnet sind, verlaufen. Eine in Bezug zur Horizontalen schräge Ausbildung von Schichten bzw. Lagen kann durch eine entsprechende Neigung einer Bauplattform erreicht werden.

Die unterschiedliche Ausrichtung von Schichten oder Lagen an einem Probenkörper in Bezug zur Horizontalen kann während der Fertigung und der Prüfung berücksichtigt werden. Durch die schräge Ausbildung der Schichten bzw. Lagen ausgebildete Oberfläche der Probekörper, die sich von Oberflächen, die an allein in horizontaler Richtung ausgebildeten Schichten bzw. Lagen ausgebildet werden, unterscheiden, ergeben sich nämlich unterschiedliche Biegeund Bruchfestigkeiten bei unterschiedlich ausgebildeten Oberflächen, z.B. aufgrund von entstehenden Kerben. Unterschiedlich ausgebildete Oberflächen haben einen erheblichen Einfluss auf die Festigkeit.

Die Ausrichtung von Bruchflächen wird dadurch auch beeinflusst.

An oder in der Trägerplatte können Sensoren zur Bestimmung mechanischer Eigenschaften vorhanden und/oder Referenzflächen an definierten Positionen der Oberfläche der Trägerplatte ausgebildet sein. So können Sensoren zur Erfassung von Dehnungen oder mechanischen Spannungen ausgebildet sein, wenn Kräfte und/oder Momente auf Prüfkörper wirken oder die Temperatur von Prüfkörpern verändert wird.

Referenzflächen können für eine optische Detektion von Dehnungen oder Verschiebungen an einer Trägerplatte, die infolge von außen wirkender mechanischer und/oder thermischer Einflüsse auftreten können, genutzt werden.

Die so erfassten Messwerte können auch für die Bestimmung mechanischer und/oder thermischer Eigenschaften von Probenkörpern genutzt werden. Sensoren und/oder Referenzflächen können dabei so angeordnet sein, dass mit ihrer Hilfe eine Bestimmung für ganz bestimmte Probenkörper möglich ist. Sensoren und/oder Referenzflächen können dazu in Bezug zu jeweiligen Probenkörpern angeordnet sein.

Zur Bestimmung mechanischer und/oder thermischer Eigenschaften an Probenkörpern unter Einsatz einer erfindungsgemäßen Probenanordnung erfolgt an den Probenkörpern sukzessive nacheinander oder bei mehreren Probenkörpern gleichzeitig ein definierter Kraft- oder Momentangriff und/oder es wird eine lokal definierte Änderung der Temperatur hervor gerufen.

Mit mindestens einem entsprechend ausgebildeten Sensor können Messsignale, die durch die jeweilige Kraft- oder Momenteinwirkung und/oder Temperaturänderung beeinflusst werden, erfasst und ausgewertet werden.

Bei einem Bruch an Probenkörpern wird eine Erfassung und Bewertung der jeweiligen Bruchfläche(n) durchgeführt. Zu den Bruchflächen kann nach dem Bruch mindestens eine Bestimmung und Protokollierung der geometrischen Abmessungen der Bruchstücke, eine Charakterisierung und Protokollierung der Bruchflächen der Bruchstücke sowie deren Ausrichtung zum Trägerelement und eine Kontrolle, ob der Bruch im Bereich der gewünschten Beanspruchung erfolgte (kann aus der Lage bzw. den Abmaßen der Bruchflächen erfolgen) durchgeführt werden.

Entstandene Bruchstücke können gesammelt und eindeutig zuordenbar gekennzeichnet bzw. gelagert werden.

Zumindest die Probenkörper können mit polymeren, metallischen, hartmetallischen Werkstoffen, Gläser, Cermets, Keramiken, Mischungen dieser Werkstoffe und auch aus Verbundwerkstoffen hergestellt worden sein.

Die Kraft- oder Momenteneinleitung in Probenkörper sollte so erfolgen, dass sich in einem hinreichend Volumen der Probenkörpergeometrie eine konstante Beanspruchung ausbilden kann.

Während der Kraft- oder Momenteneinleitung sollte die Kraft oder das Moment bis zu einem bestimmten Ereignis (z.B. bis zum Bruch) protokolliert werden. Besonders vorteilhafterweise kann auch die Verschiebung oder Verdrehung des Kraft- oder Momenteneinleitungspunktes bis zu diesem Ereignis erfasst und protokolliert werden. Nach der Erfassung von diesen Messwerten kann eine Charakterisierung entstandener Bruchflächen durchgeführt und beispielsweise erfasste Bruchflächendaten gespeichert werden. Nach Erfassung von Messwerten kann eine Zusammenfassung sowie statistische Auswertung der Einzelmessungen erfolgen.

Bruchflächen können per selbstlernender Optical Character Recognation (OCR) Software ausgewertet werden. Die Software kann durch manuelle Zuordnung der für ein definiertes Bauteil-/Werkstoffversagen charakteristischen Bruchbilder trainiert werden.

Bei dem Verfahren kann eine Einleitung von Kräften, Momenten und/oder eine lokal definierte Erwärmung an gleichen Probenkörpern, die an verschiedenen Positionen am Trägerelement angeordnet sind, an verschiedenen Positionen durchgeführt werden.

Die beispielsweise als Funktion der Oberflächenstruktur ermittelten Festigkeiten von Probenkörpern können genutzt werden, um die Ausrichtung/Geometrien/Querschnitte/ Oberflächengestaltung verschiedener (kritischer) Bereiche/Volumina im jeweiligen Probenkörper bzw. einem dementsprechenden Bauteil zu prüfen oder wenn nötig anzupassen, um ein Versagen bei der Nutzung zu vermeiden bzw. zu verzögern. Vorteilhafterweise können alle Bereiche bzw. Volumina überprüft werden.

Die geometrischen Abmessungen der einzelnen Probenkörpergeometrien können vor der Krafteinleitung bestimmt und protokolliert werden.

Probenkörper können mit unterschiedlichen Geometrien hergestellt werden. Dabei kann man die jeweilige Geometrie die Art und Weise der mechanischen und/oder thermischen Beeinflussung, die für die Bestimmung der mechanischen und/oder thermischen Eigenschaften bzw. Parameter eingesetzt wird, berücksichtigen. Es kann auch der Einfluss bestimmter Oberflächengeometrien, wie z.B. ein Einfluss einer Kerbwirkung an Probenkörpern berücksichtigt werden. So ist es auch möglich, die Geometrie und Dimensionierung von Probenkörpern so zu wählen, dass sie eine Geometrie und/oder Dimensionierung eines vergleichbaren mit dem gleichen Herstellungsverfahren, wie ein herzustellendes bzw. hergestelltes Bauteil aufweisen.

Eine Einrichtung, mit der reale mechanische Eigenschaften als Funktion der Oberflächenqualität und Temperatur ermittelt werden können, sollte automatisiert betrieben werden können und jeweils mindestens eine Trägerplatte mit darauf befestigten Probenkörpergeometrien, beispielsweise aus einem Magazin aufnehmen können. Es sollte nacheinander eine Last-, Deformationsund/oder Temperaturmessung an allen Probenkörpergeometrien auf der jeweiligen Trägerplatte durchführt werden können. Es können aber auch andere physikalische und auch chemische Eigenschaften von Probenkörpern an einer Trägerplatte bestimmt werden.

Vorteilhaft ist auch eine automatisierte optische oder digitale Dokumentation und Auswertung von Bruchflächen. Mittels Software können aus den Kraftmesswerten, Dehnungs-, Verformungs- und/oder Temperaturmesswerten sowie Bruchflächenbildern und entsprechend hinterlegten Rechenalgorithmen die realen mechanischen Eigenschaften von Probenkörpern und ggf. auch entsprechend zu fertigenden Bauteilen zum Beispiel als Funktion der Oberflächenqualität, Größe und Temperatur ermittelt werden.

Die Temperatur während des Einwirkens von Kräften und/oder Momenten auf Probenkörper kann im Bereich zwischen -50 °C und 1500 °C variiert werden. Bevorzugt ist dazu der Temperaturbereich zwischen 20 °C und 1000 °C.

Gleichartige Messungen können bei unterschiedlichen Temperaturen an verschiedenen Probenkörpergeometrien auf einer Trägerplatte oder verschiedenen Trägerplatten durchgeführt werden, indem die jeweilige Apparatur oder Einrichtung mit mindestens einer Probenkörperanordung zwischen den Messungen in definierten Temperatur-Schritten von beispielsweise 50 K automatisiert stufenweise erwärmt wird.

Es kann eine Erwärmung einzelner Probenkörper auf eine vorgegebene Temperatur jeweils einzeln für die Prüfkörper durchgeführt werden. Dabei kann jeder Probenkörper individuell auf eine bestimmte Temperatur erwärmt und bei Erreichen dieser Temperatur können die jeweiligen gewünschten Eigenschaften bestimmt werden, was auch bei gleichzeitiger Wirkung von Druckoder Zugkräften auf Probenkörper möglich ist. Eine solche individuelle Erwärmung kann beispielsweise mit Strahlungsenergie, insbesondere Laseroder Elektronenstrahlen, Mikrowellen aber auch induktiv erreicht werden.

Mit der Erfindung können Untersuchungen an Probenkörpern durchgeführt werden, bei denen vor deren Durchführung keine Nachbehandlungen an Oberflächen zwingend durchgeführt werden müssen. Es ist nicht erforderlich genormte Geometrien zu beachten, da man sich an jeweiligen Bauteilgeometrien und deren Beanspruchungen im Betrieb orientieren kann. Die Volumina von Probenkörpern können so gewählt werden, wie sie auch bei in gleicher Weise herzustellenden Bauteilen gewählt werden können bzw. sollen.

Es sind Untersuchungen mit einer großen Probenanzahl, bevorzugt gleicher und gleich hergestellter Probenkörper möglich, was die Genauigkeit der Bestimmungsergebnisse positiv beeinflusst.

Insbesondere bei einer gleichzeitigen Herstellung von Probenkörpern und Trägerplatte sind der Zeitaufwand für die Fertigung und der Materialaufwand relativ klein.

Insbesondere bei der Bestimmung mechanischer Eigenschaften kann man sich an bekannte technische Lösungen anlehnen und beispielsweise Untersuchungen durchführen, wie sie an einseitig eingespannten Stäben üblich sind. Untersuchungen können im Bereich bekannter Biegespannung durch entsprechende Kraft- und Momenteinleitung an geeigneten Positionen von Probenkörpern durchgeführt werden.

Es können auch an sich bekannte Pull-Shear-Tester für die Bestimmung der Bruchfestigkeit oder Bruchkraft eingesetzt werden, so dass eine gute Automatisierbarkeit gegeben ist.

Erfindungsgemäße Probenkörperanordnungen können mit den bekannten additiven Herstellungsverfahren hergestellt werden. Besonders prädestiniert sind die Druck-Verfahren. Es können aber auch das selektive Lasersintern bzw. -schmelzen oder auch die selektive Fertigung eines pulverförmigen Werkstoffs, der schichtweise mit einem Elektronenstrahl lokal definiert verfestigt wird, angewandt werden.

An den jeweils gleichen Probekörpern sollten jeweils Bereiche vorhanden sein, die sich bei einer gleichen Belastung von außen gleich verhalten. Dies können z.B. bei angreifenden Druck- oder Zugkräften Bereiche mit jeweils gleichem Widerstandsmoment sein. Selbstverständlich sollte dann die Krafteinwirkung auf die gleichen Probenkörper ebenfalls gleich erfolgen.

Nachfolgend soll die Erfindung beispielhaft weiter erläutert werden.

Dabei zeigen:
Figur 1 zwei in perspektivischer Darstellung gezeigte Beispiele für zwei erfindungsgemäße Probenkörperanordnungen, die bei unterschiedlichen Neigungswinkeln in Bezug zur Horizontalen mit einem additiven Herstellungsverfahren hergestellt worden sind und
Figur 2 ein Beispiel eines Probenkörpers in drei Ansichten.

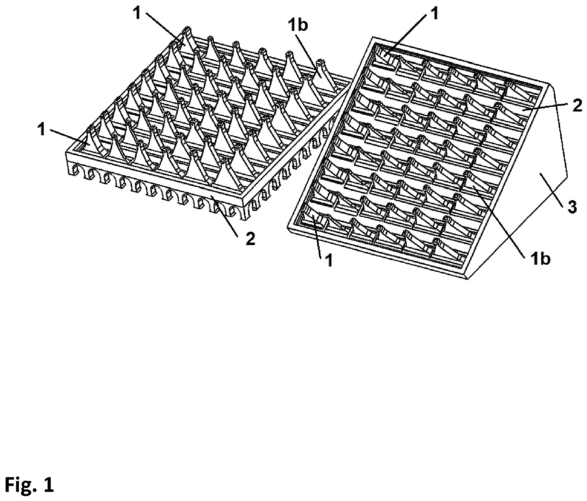

Die Figur 1 zeigt perspektivische Darstellungen von zwei Beispielen erfindungsgemäßer Probenkörperanordnungen. Dabei sind bei beiden gezeigten Beispielen jeweils sechs unterschiedliche Probenkörper 1, 1b in einer regelmäßigen Reihen- und Spaltenanordnung auf einer Trägerplatte 2 mit jeweils gleichen Abständen zueinander ausgebildet. Die jeweils acht gleichen Probenkörper 1, was die Geometrie und Dimensionierung betrifft, sind gemeinsam mit den anderen Probenkörpern und der Trägerplatte 2 mit dem gleichen additiven Herstellungsverfahren hergestellt worden. Probenkörper 1 und Trägerplatte 2 bestehen aus demselben Material. Bei diesem Beispiel wurden die Probenkörper 1 und die Trägerplatte 2 aus Aluminiumoxid als Material (photopolymerisierbare Suspension Lithalox 350D der Fa. Lithoz) und mittels LCM-Verfahren (Anlage CeraFab 7500 der Fa. Lithoz) hergestellt.

Um unterschiedliche Oberflächen in den zu prüfenden Bereichen der Probekörper 1, 1b zu generieren, wurde unterhalb der Trägerplatten 2 unterschiedliche Supportstrukturen 3 im CAD-Modell integriert, woraus unterschiedliche Winkel zwischen der Ausrichtung der Trägerplatte 2 und den Bauplattformen 3 resultierten.

Bei der linken Darstellung von Figur 1 erfolgte die Herstellung so, dass die Oberfläche der Trägerplatte 2 auf der die Probenkörper 1 ausgebildet sind, in einer Ebene angeordnet ist, die parallel zur Bauplattform und damit senkrecht zur Baurichtung ausgerichtet ist. Dadurch sind die trapezförmigen Oberflächen der Probenkörper 1 senkrecht zur Bauplattform ausgerichtet und die Schichten bzw. Lagen mit denen die Probenkörper 1 hergestellt worden sind, senkrecht zu diesen Oberflächen ausgerichtet. Die Probenkörper 1 erstrecken sich ausgehend von der Oberfläche der Trägerplatte 2 an mindestens einer Seite senkrecht in Bezug zu dieser Oberfläche der Trägerplatte 2.

Bei der rechten Darstellung war die Trägerplatte 2 mit den senkrecht zur Trägerplattenoberfläche ausgerichteten Probenkörpern 1 durch eine entsprechende Supportstruktur 3 während der Herstellung um 30° zur Oberfläche der Bauplattform (nicht dargestellt) geneigt, so dass die Probenkörper 1 und deren Oberflächen ebenfalls in einem Winkel geneigt ausgebildet worden sind. Daraus resultieren auch Oberflächenbereiche an Probenkörpern 1, die sich in ihren Eigenschaften und Beschaffenheit von den an sich gleichen Oberflächenbereichen, die an den Probenkörpern 1 gemäß der linken Darstellung von Figur 1 ausgebildet worden sind, unterscheiden, was natürlich zu anderen mechanischen Eigenschaften führt.

Gemäß der rechten Darstellung können Verhältnisse simuliert bzw. berücksichtigt werden, wie sie auch an entsprechend hergestellten Bauteilen auftreten, wenn während des Herstellungsprozesses hergestellte Strukturen gegenüber der Bauplattform entsprechend geneigt sind.

Die ansonsten unter gleichen Herstellungsbedingungen hergestellten Probenkörper 1, 1b können auch auf einer Trägerplatte 2 gemeinsam jedoch diskret mit ausreichendem Abstand zueinander angeordnet sein und dabei unterschiedliche Ausrichtungen zur Oberfläche der Trägerplatte 2 aufweisen. Auch mit ihnen können die im allgemeinen Teil der Beschreibung erläuterten Untersuchungen, was die mechanischen und thermischen Eigenschaften betrifft, durchgeführt werden.

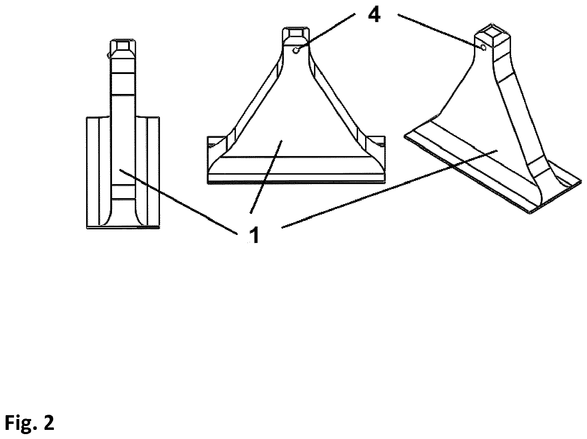

In Figur 2 ist ein Beispiel für Probenkörper 1 gezeigt, das insbesondere für die Bestimmung der Biege-, Bruchfestigkeit und/oder des E-Moduls geeignet ist.

Dabei weist dieser Probenkörper 1 zwei parallel zueinander ausgerichtete Oberflächen und zwei sich gegenüberliegende teilweise abgeschrägte Oberflächenbereiche, die in parallel zueinander und senkrecht zu den anderen zwei Oberflächen ausgerichtete Oberflächenbereiche auslaufen. Zwischen diesen Oberflächenbereichen und am Fuß des Probenkörpers 1 sind Mindestradien eingehalten, um den Einfluss einer Kerbwirkung klein halten zu können.

An einer Oberfläche im Oberflächenbereich, in dem parallel zueinander und senkrecht zu den anderen zwei Oberflächen ausgerichtete Oberflächenbereiche auslaufen, ist ein Oberflächenbereich 4 für einen definierten Kraft- oder Momentangriff und/oder eine definierte Erwärmung vorhanden. Dieser Oberflächenbereich 4 sollte an möglichst vielen, bevorzugt allen Probenkörpern 1, die an einer Trägerplatte 2 vorhanden sind, an der gleichen Position angeordnet sein und eine gleiche Oberfläche aufweisen, was sowohl die geometrische Form, wie auch die Rauheit betrifft.

## Patentansprüche

1. Probenkörperanordnung zur Bestimmung mechanischer und/oder thermischer Eigenschaften von Probenkörpern, bei der mehrere Probenkörper (1), die jeweils gleich dimensioniert, mit gleicher Geometrie und mit dem gleichen additiven Herstellungsverfahren hergestellt worden sind, auf einer Oberfläche einer Trägerplatte (2) an definierten Positionen in einem Abstand zueinander angeordnet sind und
die Trägerplatte (2) so ausgebildet ist, dass sie in einer Halteeinrichtung definiert fixierbar ist; und
die Probenkörper (1) gemeinsam mit der Trägerplatte (2) mit dem additiven Herstellungsverfahren hergestellt worden sind oder mit dem additiven Herstellungsverfahren hergestellte Probenkörper (1) an der jeweiligen Oberfläche der Trägerplatte (2) stoff- und/oder formschlüssig befestigt sind,
**dadurch gekennzeichnet, dass**
die Probenkörper (1) auf der Trägerplatte (2) angeordnet sind, die additiv auf einer Ebene, die in einem Winkel im Bereich 5 ° bis 60 ° in Bezug zur Horizontalen ausgerichtet war, hergestellt worden sind.

2. Anordnung nach Anspruch 1, **dadurch gekennzeichnet, dass** an der Oberfläche von Probenkörpern (1) definiert mindestens ein Oberflächenbereich (3) für einen Kraft- oder Momentangriff einer Einrichtung zur Bestimmung mechanischer Eigenschaften der an den gleichen Probenkörpern (1) jeweils an der gleichen Position angeordnet und gleich ausgebildet ist.

3. Anordnung nach einem der vorhergehenden Ansprüche, **dadurch gekennzeichnet, dass** an der Oberfläche von Probenkörpern (1) definiert mindestens ein Oberflächenbereich (3) für eine definierte Erwärmung des jeweiligen Probenkörpers (1), der an den gleichen Probenkörpern (1) jeweils an der gleichen Position angeordnet und gleich ausgebildet ist.

4. Anordnung nach einem der vorhergehenden Ansprüche, **dadurch gekennzeichnet, dass** Probenkörper (1) in einer Reihen- und Spaltenanordnung und dabei jeweils gleiche Probenkörper (1) in gemeinsam einer Reihe und/oder Spalte angeordnet sind.

5. Anordnung nach einem der vorhergehenden Ansprüche, **dadurch gekennzeichnet, dass** mindestens 10 gleiche Probenkörper (1) auf einer Oberfläche einer Trägerplatte (2) angeordnet sind.

6. Anordnung nach einem der vorhergehenden Ansprüche, **dadurch gekennzeichnet, dass** die Probenkörper (1) so angeordnet sind, dass eine eindeutige Zuordnung der Probenkörper (1) möglich ist sowie Abstände zwischen den Probenkörpern (1) eingehalten sind, die eine gegenseitige Beeinflussung der benachbart angeordneten Probenkörper (1) verhindern und eine Zugänglichkeit zu Probenkörpern (1) mit einem mechanischen Prüfgerät und/oder mindestens einem Sensor ermöglichen.

7. Anordnung nach einem der vorhergehenden Ansprüche, **dadurch gekennzeichnet, dass** an oder in der Trägerplatte (2) Sensoren zur Bestimmung mechanischer Eigenschaften vorhanden und/oder Referenzflächen zur Bestimmung mechanischer, physikalischer oder chemischer Eigenschaften an definierten Positionen der Oberfläche der Trägerplatte (2) ausgebildet sind.

8. Verfahren zur Bestimmung mechanischer und/oder thermischer Eigenschaften an Probenkörpern unter Einsatz einer Probenanordnung nach einem der vorhergehenden Ansprüche, **dadurch gekennzeichnet, dass** an den Probenkörpern (1) sukzessive nacheinander oder bei mehreren Probenkörpern (1) gleichzeitig ein definierter Kraft- oder Momentangriff und/oder eine lokal definierte Änderung der Temperatur erfolgt und
daraus mit mindestens einem Sensor Messsignale, die durch die jeweilige Kraft- oder Momenteinwirkung und/oder Temperaturänderung beeinflusst werden, erfasst und ausgewertet werden
und
bei einem Bruch an Probenkörpern (1) eine Erfassung und Bewertung der jeweiligen Bruchfläche(n) durchgeführt wird.

9. Verfahren nach dem vorhergehenden Anspruch, **dadurch gekennzeichnet, dass** eine Einleitung von Kräften, Momenten und/oder eine lokal definierte Erwärmung an gleichen Probenkörpern (1), die an verschiedenen Positionen am Trägerelement (2) angeordnet sind, an verschiedenen Positionen simultan oder sequenziell durch geführt wird.

10. Verfahren nach den zwei vorhergehenden Ansprüche, **dadurch gekennzeichnet, dass** die geometrischen Abmessungen der einzelnen Probenkörpergeometrien vor der Krafteinleitung bestimmt und protokolliert werden.

11. Verfahren nach einem der drei vorhergehenden Ansprüche, **dadurch gekennzeichnet, dass** die Temperatur während des Einwirkens von Kräften und/oder Momenten auf Probenkörper bevorzugt stufenweise variiert wird.

12. Verfahren nach einem der vier vorhergehenden Ansprüche, **dadurch gekennzeichnet, dass** eine Erwärmung einzelner Probenkörper (1) auf eine vorgegebene Temperatur jeweils einzeln für die Prüfkörper (1) durchgeführt wird.

14. Verfahren nach einem der fünf vorhergehenden Ansprüche, **dadurch gekennzeichnet, dass** die ermittelten richtungsabhängigen Eigenschaften in die Bauteilauslegung einfließen und das Bauteildesign entsprechend angepasst wird.

## Claims

1. A test specimen arrangement for determining mechanical and/or thermal properties of test specimens, in which a plurality of test specimens (1), each of which has the same dimensions, the same geometry and has been produced using the same additive manufacturing process, are arranged at a distance from one another on a surface of a carrier plate (2) at defined positions and the carrier plate (2) is designed such that said carrier plate can be fixed in a defined manner in a holding device; and
the test specimens (1) have been produced together with the carrier plate (2) using the additive manufacturing process, or test specimens (1) produced using the additive manufacturing process are attached to the respective surface of the carrier plate (2) in a materially and/or form-fitting manner,
**characterized in that**
the test specimens (1) are arranged on the support plate (2), the test specimens having been produced additively on a plane which was oriented at an angle in the range 5° to 60° with respect to the horizontal.

2. The arrangement according to claim 1, **characterized in that** at least one surface area (3) is defined on the surface of test specimens (1) for a force or torque application of a device for determining mechanical properties, the surface area being arranged at the same position on the same test specimens (1) and having the same design.

3. The arrangement according to any one of the preceding claims, **characterized in that** at least one surface area (3) is defined on the surface of test specimens (1) for a defined heating of the respective test specimen (1), the surface area being arranged at the same position on the same test specimens (1) and having the same design.

4. The arrangement according to any one of the preceding claims, **characterized in that** test specimens (1) are arranged in a row and column arrangement and the same test specimens (1) are arranged together in a row and/or column.

5. The arrangement according to any one of the preceding claims, **characterized in that** at least 10 identical test specimens (1) are arranged on a surface of a carrier plate (2).

6. The arrangement according to any one of the preceding claims, **characterized in that** the test specimens (1) are arranged such that an unambiguous assignment of the test specimens (1) is possible and distances between the test specimens (1) are maintained, which prevent the test specimens arranged adjacent to each other from influencing each other (1) and allow access to test specimens (1) with a mechanical test device and/or at least one sensor.

7. The arrangement according to any one of the preceding claims, **characterized in that** sensors for determining mechanical properties are present on or in the carrier plate (2) and/or reference surfaces for determining mechanical, physical or chemical properties are formed at defined positions on the surface of the carrier plate (2).

8. A method for determining mechanical and/or thermal properties on test specimens using a test specimen arrangement according to any one of the preceding claims, **characterized in that**
a defined force or torque is applied to the test specimens (1) successively or, for a plurality of test specimens (1), simultaneously and/or a locally defined change in temperature and
measuring signals, which are influenced by the respective force or torque effect and/or temperature change, are recorded and evaluated therefrom using at least one sensor and
if there is a fracture in test specimens (1), the respective fracture surface(s) is/are recorded and evaluated.

9. The method according to the preceding claim, **characterized in that** an introduction of forces, torques and/or locally defined heating is carried out simultaneously or sequentially at different positions on the same specimens (1) which are arranged at different positions on the carrier element (2).

10. The method according to the two preceding claims, **characterized in that** the geometric dimensions of the individual test specimen geometries are determined and recorded before the force is introduced.

11. The method according to any one of the three preceding claims, **characterized in that** the temperature is varied preferably incrementally during the action of forces and/or torques on the test specimen.

12. The method according to any one of the four preceding claims, **characterized in that** individual test specimens (1) are heated to a predetermined temperature individually for each test specimen (1).

14. The method according to any one of the five preceding claims, **characterized in that** the direction-dependent properties determined are included in the component design and the component design is adapted accordingly.

## Revendications

1. Ensemble de corps d'échantillons pour la détermination de propriétés mécaniques et/ou thermiques de corps d'échantillons, pour lequel plusieurs corps d'échantillons (1), qui sont respectivement de mêmes dimensions, ont été fabriqués avec la même géométrie et avec le même procédé de fabrication additive, sont disposés sur une surface d'une plaque de support (2) à des positions définies à une certaine distance les uns des autres et la plaque de support (2) est réalisée de telle sorte qu'elle peut être fixée de manière définie dans un dispositif de maintien ; et
les corps d'échantillons (1) ont été fabriqués conjointement avec la plaque de support (2) avec le procédé de fabrication additive ou des corps d'échantillons (1) fabriqués avec le procédé de fabrication additive sont fixés par liaison de matière et/ou par complémentarité de formes sur la surface respective de la plaque de support (2),
**caractérisé en ce que**
les corps d'échantillons (1) sont disposés sur la plaque de support (2), qui a été fabriquée de manière additive sur un plan, qui était orienté selon un angle dans la plage de 5° à 60° par rapport à l'horizontale.

2. Ensemble selon la revendication 1, **caractérisé en ce qu'**au moins une zone de surface (3) pour une application de force ou de couple d'un dispositif de détermination de propriétés mécaniques, qui est disposée sur les mêmes corps d'échantillons (1) respectivement à la même position et réalisée de manière identique, sur la surface de corps d'échantillons (1) de manière définie.

3. Ensemble selon l'une quelconque des revendications précédentes, **caractérisé en ce qu'**au moins une zone de surface (3) pour un chauffage défini du corps d'échantillon (1) respectif, qui est disposée sur les mêmes corps d'échantillons (1) respectivement à la même position et réalisée de manière identique, sur la surface de corps d'échantillons (1) de manière définie.

4. Ensemble selon l'une quelconque des revendications précédentes, **caractérisé en ce que** des corps d'échantillons (1) sont disposés dans un ensemble de rangées et de colonnes et ce faisant des corps d'échantillons (1) respectivement identiques dans conjointement une rangée et/ou colonne.

5. Ensemble selon l'une quelconque des revendications précédentes, **caractérisé en ce qu'**au moins 10 corps d'échantillons (1) identiques sont disposés sur une surface d'une plaque de support (2).

6. Ensemble selon l'une quelconque des revendications précédentes, **caractérisé en ce que** les corps d'échantillons (1) sont disposés de telle sorte qu'une affectation univoque des corps d'échantillons (1) est possible et que des distances sont maintenues entre les corps d'échantillons (1), qui empêchent une influence mutuelle des corps d'échantillons (1) disposés au voisinage et permettent une accessibilité aux corps d'échantillons (1) avec un appareil de contrôle mécanique et/ou au moins un capteur.

7. Ensemble selon l'une quelconque des revendications précédentes, **caractérisé en ce que** des capteurs pour la détermination de propriétés mécaniques sont présents sur ou dans la plaque de support (2) et/ou des surfaces de référence pour la détermination de propriétés mécaniques, physiques ou chimiques sont réalisées à des positions définies de la surface de la plaque de support (2).

8. Procédé pour la détermination de propriétés mécaniques et/ou thermiques sur des corps d'échantillons au moyen d'un ensemble de corps d'échantillons selon l'une quelconque des revendications précédentes, **caractérisé en ce que**
une application de force ou de couple définie et/ou une modification définie localement de la température se fait successivement sur les corps d'échantillons (1) ou simultanément pour plusieurs corps d'échantillons (1) et
à partir de cela des signaux de mesure, qui sont influencés par l'action de force ou de couple et/ou modification de température respective, sont détectés et évalués avec au moins un capteur, et
lors d'une rupture sur des corps d'échantillons (1), une détection et évaluation de la(des) surface(s) de rupture respective(s) est effectuée.

9. Procédé selon la revendication précédente, **caractérisé en ce qu'**une introduction de forces, de couples et/ou d'un chauffage défini localement sur des corps d'échantillons (1) identiques, qui sont disposés à différentes positions sur l'élément de support (2), est effectuée simultanément ou séquentiellement à différentes positions.

10. Procédé selon les deux revendications précédentes, **caractérisé en ce que** les dimensions géométriques des géométrie de corps d'échantillons individuels sont déterminées et consignées avant l'introduction de force.

11. Procédé selon l'une quelconque des trois revendications précédentes, **caractérisé en ce que** la température varie de préférence par étapes pendant l'action de forces et/ou de couples sur les corps d'échantillons.

12. Procédé selon l'une quelconque des quatre revendications précédentes, **caractérisé en ce qu'**un chauffage de corps d'échantillons (1) individuels à une température prédéfinie est effectué respectivement individuellement pour les corps d'échantillons (1).

14. Procédé selon l'une quelconque des cinq revendications précédentes, **caractérisé en ce que** les propriétés directionnelles déterminées sont prises en compte dans la conception du composant et la conception du composant est adaptée en conséquence.
